# EUROPEAN PATENT APPLICATION

(11) **EP 4 435 687 A1**
(43) Date of publication of application: **25.09.2024**
(21) Application number: 22909498.2
(22) Date of filing: 25.10.2022
(51) Int. Cl.: G06Q 10/06

(54) **SINGLE BOARD MANAGEMENT METHOD, ELECTRONIC EQUIPMENT AND STORAGE MEDIUM**

(30) Priority: 24.12.2021 CN 202111599512
(71) Applicant: ZTE Corporation, Shenzhen, Guangdong 518057 (CN)
(72) Inventor: YANG, Wei, Shenzhen, Guangdong 518057 (CN)
(74) Representative: Osterhoff, Utz
(86) International application number: PCT/CN2022/127478
(87) International publication number: WO 2023/116180

(57) **Abstract**

The embodiments of the present application relate to a single board management method, an electronic device and a storage medium. The method includes: obtaining attribute information of a single board, and the attribute information is immutable; determining whether the single board is an illegal single board according to the attribute information; and in response to that the single board is the illegal single board, reporting alarm information, and prohibiting operation of the single board. According to the attribute information that is immutable in the single board, whether the single board is an illegal single board is determined, so that under the situation that the single board is stolen, the user can timely control the single board in the illegal state such as theft.

## Description

### CROSS-REFERENCE TO RELATED APPLICATIONS

This application claims priority to Chinese Patent Application No. 202111599512.0, filed on December 24, 2021, the entire contents of which are incorporated herein by reference.

### TECHNICAL FIELD

The embodiments of the present application relate to the field of data management, and in particular to a single board management method, an electronic device, and a storage medium.

### BACKGROUND

With the large-scale commercial launch of 5G (5th Generation Mobile Communication Technology), the use of single board hardware supporting the operation of 5G has become more and more widespread, and the demand for commercial single boards has increased.

However, in the process of large-scale use of single boards, there will inevitably be a situation that hardware will be lost, stolen, or otherwise become illegal. Users or relevant safety and security personnel need to control and track them. However, the current single board, as a hard currency that is easy to circulate, does not have an anti-theft configuration, and cannot solve the problem of theft control well. Therefore, the theft of the single board will cause huge losses to the equipment manufacturers, and the illegal single board will also bring hidden dangers to the network quality and network security.

### SUMMARY

The main purpose of the embodiments of the present application is to provide a single board management method, so that the illegal state of a single board can be detected and located in time, thereby reducing the losses of equipment manufacturers, and ensuring network security.

To achieve the above purposes, embodiments of the present application provide a single board management method, including: obtaining attribute information of a single board, and the attribute information is immutable; determining whether the single board is an illegal single board according to the attribute information; and in response to that the single board is the illegal single board, reporting alarm information, and prohibiting operation of the single board.

To achieve the above purposes, embodiments of the present application further provide an electronic device, including: at least one processor, and a memory communicated with the at least one processor; the memory is configured for storing an instruction executable by the at least one processor, and the instruction is executed by the at least one processor so that the at least one processor can execute the single board management method mentioned above.

To achieve the above purposes, embodiments of the present application further provide a computer readable storage medium storing a computer program, and when the computer program is executed by a processor, the above-mentioned single board management method is implemented.

The single board management method provided in the present application determines whether the single board is an illegal single board according to the attribute information that is immutable in the single board, so that under the situation that the single board is stolen, the user can timely control the single board in the illegal state such as theft, and can obtain the location of the illegal single board according to the alarm information and track the location, so that the illegal single board can be recovered in time, thereby ensuring the commercial interests of the user, and improving the user experience.

### BRIEF DESCRIPTION OF THE DRAWINGS

FIG. 1 is a flow chart of a single board management method provided by an embodiment of the present application.
FIG. 2 is a schematic diagram of a single board management method provided by an embodiment of the present application.
FIG. 3 is a schematic diagram of a single board management method provided by another embodiment of the present application.
FIG. 4 is a schematic diagram of an electronic device provided by an embodiment of the present application.

### DETAILED DESCRIPTION OF THE EMBODIMENTS

In order to make the purpose, technical solutions and advantages of the embodiments of the present application clearer, each embodiment of the present application will be described in detail below with reference to the accompanying drawings. However, those skilled in the art can understand that in each embodiment of the present application, many technical details are provided to enable readers to better understand the present application. However, even without these technical details and various changes and modifications based on the following embodiments, the technical solution claimed in the present application can also be implemented. The division of the following embodiments is for the convenience of description and should not constitute any limitation on the specific implementation of the present application. The various embodiments can be combined with each other and referenced with each other on the premise that there is no contradiction.

The terms of "first", "second" in the embodiments of the present application are only used for descriptive purposes and cannot be understood as indicating or implying the relative importance or implicitly indicating the quantity of the technical features indicated. Therefore, features defined as "first" and "second" may explicitly or implicitly include at least one of these features. In the description of the present application, the terms "include", "have" or any other variation thereof are intended to cover a non-exclusive inclusion. For example, a system, product or device that includes a series of components or units is not limited to the listed components or units, but optionally also includes components or units that are not listed, or optionally also includes other components or units that are inherent to these products or devices. In the description of the present application, "plurality" means at least two, for example, two, three, etc., unless otherwise expressly and specifically limited.

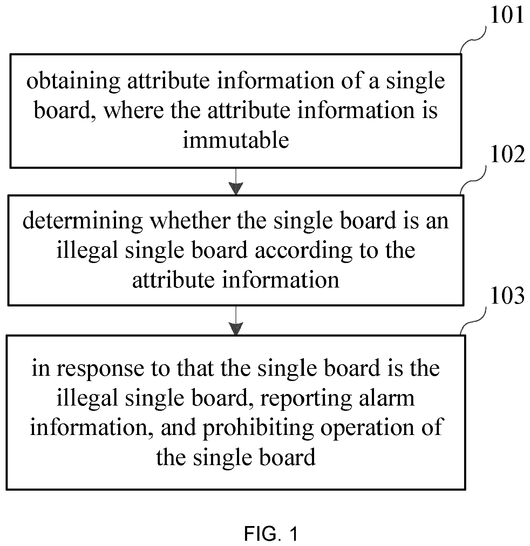

An embodiment of the present application relates to a single board management method. The specific process is shown in FIG. 1.

Step 101, obtaining attribute information of a single board, and the attribute information is immutable.

Step 102, determining whether the single board is an illegal single board according to the attribute information.

Step 103, in response to that the single board is the illegal single board, reporting alarm information, and prohibiting operation of the single board.

In this embodiment, according to the attribute information that is immutable in the single board, determining whether the single board is an illegal single board, so that under the situation that the single board is stolen, the user can timely control the single board in the illegal state such as theft, and can obtain the location of the illegal single board according to the alarm information and track the location, so that the illegal single board can be recovered in time, thereby ensuring the commercial interests of the user, and improving the user experience.

The implementation details of the single board management method of this implementation are specifically described below. The following content is only the implementation details provided for easy understanding and is not necessary for implementing this solution.

At step 101, the attribute information of a single board is obtained, and the attribute information is immutable. That is, the attribute information on the single board can be directly queried or indirectly queried, and the attribute information on the single board is configured as a condition for determining whether the single board is legal.

In an example, the attribute information is, for example, the first identification of the single board and/or the second identification of the single board. Only one or both of the first identification and the second identification can exist. Neither the first identification nor the second identification supports changes.

Specifically, the first identification can be an electronic IDentity (EID for short) of the single board in response to leaving a factory, which is globally unique and does not support changes; the second identification can be the operator information entered when the single board is first installed and powered on after leaving the factory, which does not support changes. The first identification can be used by network management equipment to manage a single board connected to a network element, and the network element is in communication with the network management equipment; the second identification can be used by the network element to manage the single board.

That is, there are different identifications for different detection devices to determine the legitimacy of the single board, so that different scenarios and different requirements for the detection of the single board can be met.

At step 102, whether the single board is an illegal single board is determined according to the attribute information. According to the attribute information of the single board obtained in the above steps, whether the single board is legal is determined. It can be determined whether the single board is legal in combination with the conditions of the specific implementation scenario and the attribute information of the single board obtained.

In an example, in response to being applied to a network management equipment, whether the single board is the illegal single board is determined according to the first identification in the attribute information. That is, when the present application is applied to the network management equipment, the network management equipment determines whether the single board is an illegal single board according to the first identification; or the user selects the judgment mode as the first mode, that is, the network management equipment determines whether the single board is an illegal single board according to the first identification of the single board.

Specifically, an identification in a pre-stored blacklist is queried; and in response to that the first identification matches any identification in the blacklist, it is determined that the single board is the illegal single board. The first identification may be an EID. That is, in the situation that the single board is stolen or being in other illegal states and needs to be controlled, the EID of the single board may be added to the blacklist. When the board is in use after being stolen, it is detected that the detected single board is a single board in the blacklist according to the EID of the single board, and then performing actions for control and alarm. Optionally, the EID of the single board may be reported by the network element to the network management equipment when the single board is inserted into the network element (or establishes other communication connection methods with the network element), so that the network management equipment obtains it. The network element is in communication with the network management equipment, for example, the network element is within the management scope of the network management equipment.

It is understandable that the blacklist supports updates, which includes regular updates or performs update whenever there are changes.

In another example, the determining whether the single board is the illegal single board according to the first identification includes: querying an identification in a pre-stored whitelist; and in response to that the first identification does not match any identification in the whitelist, determining that the single board is the illegal single board. The first identification can be an EID. That is, the EID of the single board in normal operation is put into the whitelist, and if it is detected that the EID of the single board connected to the network element is not in the whitelist, then performing actions for control and alarm.

It is understandable that the whitelist supports updates, which includes regular updates or performs update whenever there are changes. In addition, after the network management equipment determines that the single board is an illegal single board, it can send a control instruction to the network element into which the illegal single board is inserted (communicatively connected, or electrically connected, etc.), and the control instruction is configured to prohibit the network element from operating the single board.

In an example, in response to being applied to a network element, the obtaining the attribute information of the single board includes: obtaining a second identification in the attribute information of the single board. The determining whether the single board is the illegal single board according to the attribute information includes: determining whether the single board is the illegal single board according to operator information of the network element and the second identification. The second identification of the single board can be the operator identification of the single board. That is, when the present application is applied to a network element, the network element determines whether the single board is an illegal single board according to its own operator information and the second identification of the single board; or the user adjusts the judgment mode to the second mode, that is, the network element determines whether the single board is an illegal single board according to the second identification of the single board.

Specifically, when the single board is first installed and powered on after leaving the factory, the second identification of the single board is obtained, and changes are not supported. That is, the second identification is only allowed to be written once. For example, the operator identification is written into the single board (once written, it cannot be modified, such as by burning), and the operator identification includes: Public Land Mobile Network (PLMN), which is a network established and operated by the government or an operator approved by it for the purpose of providing land mobile communication services to the public, PLMN = Mobile Country Code (MCC) + Mobile Network Code (MNC), for example, the PLMN of China Mobile is 46000, and the PLMN of China Unicom is 46001. In the subsequent use process, after the network element is powered on, comparing the operator information (such as PLMN) in the configuration data of the network element with the second identification of the single board, and if they are different, determining that the single board is an illegal single board.

In addition, the network element supports the network management equipment to set the second identification to the single board powered on for a first time by an input interface of the network element, and the single board powered on for the first time is in a state of being connected to the network element. That is, the network element has a newly added input interface, and the input interface enables the network management equipment to input the second identification (for example, input the operator information) to the single board that is connected to the network element and powered on for the first time by the input interface, and the second identification only supports one-time input and cannot be modified after input. This operation process can be completed before executing the single board management method of the present application, that is, pre-setting the second identification in the single board.

That is, different detection methods can be used to cope with different detection scenarios. For example, when applied to network management equipment, a blacklist or a whitelist can be used, and EID is used for detection, and both the blacklist and the whitelist support updating; when applied to a network element, the operator identification of the single board can be used for detection, that is, if the single board is in a cross-operator state, it has actually been stolen or illegally used, so once it is judged that the operator of the single board is different from the operator of the network element, the single board is judged to be an illegal single board. In addition, the mode can be chosen according to the actual situation, such as chosen to use a blacklist or a whitelist for detection and judgment, or chosen to detect and judge according to the operator identification. In some execution processes, when the single board is located in a cross-operator scenario, the blacklist and whitelist based on the operator may not be used, and then the judgment is made based on the second identification of the single board.

At step 103, in response to that the single board is the illegal single board, alarm information is reported, and operation of the single board is prohibited. That is, when the single board is identified as an illegal single board, the control strategy is executed on the illegal single board.

For example, when applied to network management equipment, the network management equipment identifies the single board as an illegal single board, and can send a control instruction to the network element to which the single board is connected, and report alarm information; when applied to the network element, the network element identifies the single board as an illegal single board, and disables the illegal single board, and reports alarm information.

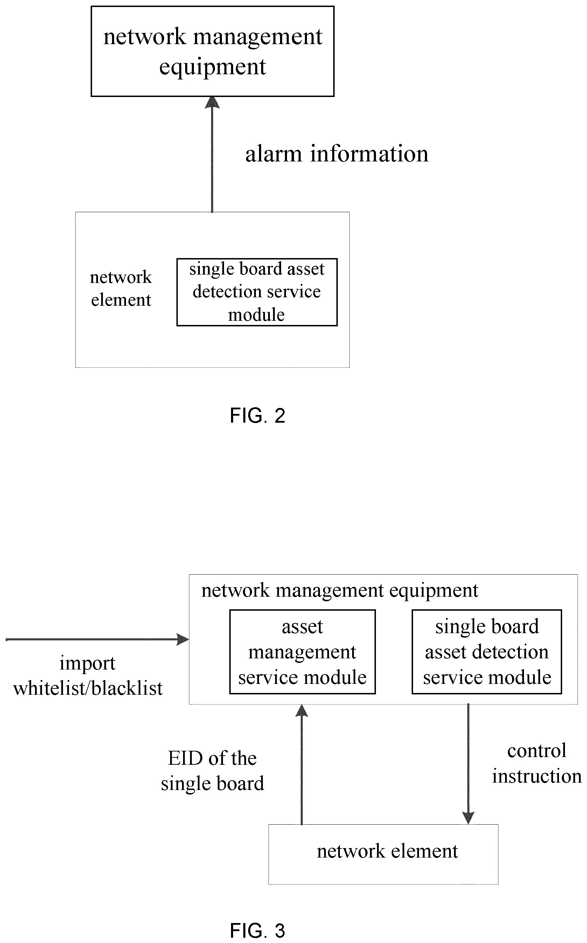

In some specific execution processes, when applied to a network element, for example, the network element has an input interface that supports writing (once written, it cannot be modified, such as by burning) the operator information. When the single board is installed and powered on for the first time after leaving the factory, the user writes the operator information to the single board by the above interface on the network management equipment, and batch writing is supported here. In the subsequent use process, after the network element is powered on, the operator information in the single board can be compared with the operator information in the network element configuration data; if they are different, the single board function is disabled and an alarm is reported, which can control the illegal transfer of single boards between different operators. As shown in FIG. 2, for example, the above process is mainly performed by the "single board asset detection service module" in the network element. In addition, FIG. 2 is only a schematic diagram of the alarm, and the alarm also supports transmission to other devices.

In some specific execution processes, when applied to network management, for example, each single board has an EID, that is, the electronic IDentity of the single board, and the EID is stored in the single board. The EID is globally unique and cannot be tampered with by the user. The asset management service module of the network management equipment will collect the EIDs of all single boards in service (that is, network elements connected to the management scope of the network management equipment), and the operator imports the blacklist (the identification of the illegal single board) into the network management equipment. The single board asset detection service module in the network management equipment identifies the illegal single board in the system, and sends a single board control command to the corresponding network element, thus restricting the use of the single board, and reporting an alarm.

Or, each single board has an EID, that is, the electronic IDentity of the single board, and the EID is stored in the single board. The EID is globally unique and cannot be tampered with by the user. The asset management service module of the network management equipment will collect the EIDs of all single boards in service (that is, network elements connected to the management scope of the network management equipment), and the user imports the whitelist to the network management. The single board asset detection service module in the network management equipment finds the illegal single board in the system that is not in the whitelist, and sends a single board control command to the corresponding network element, thus restricting the use of the single board, and reporting an alarm, as shown in FIG. 3.

The following problems can be solved by the implementation of the present application, including:
The single board purchased by operator A is stolen, and operator A requires these stolen single boards to be disabled in other operators. Then it can use the situation of being applied to the network element, that is, by detecting the operator information of the network element and the second identification of the single board to achieve the purpose of disabling in other bureaus.

Operator B: the single board purchased by operator B is stolen. Since the single board of operator B can only be used in the system of operator B, the method applied to network management equipment can be adopted. That is, the first identification of the single board is detected by the blacklist or whitelist, so as to achieve the purpose of controlling the internal circulation of the stolen single board in the system of operator B and being able to trace the location of the single board.

Or, there are the situation that frequently purchasing second-hand equipment from the market by illegal channels for existing site expansion, transformation and spare parts. Due to the lack of good restrictive measures, it causes loss to the operator's business. Using the implementation of the present application can identify the illegal single boards and issue timely alarms, thus realizing the control of single boards, and ensuring the business interests of users (such as operators who purchase this product).

In the implementation of the present application, the needs for determining the legality of single boards in different scenarios can be met. By different identifications in the attribute information of the single board, different judgment conditions are used for detection, which includes the judgment by using the blacklist and whitelist in the network management equipment and the EID in the single board, or the judgment by using the operator information in the network element and the operator information in the single board. It meets the user's needs for single board anti-theft in various scenarios, so that the single board can be discovered and tracked in time after being stolen, thus protecting the user's commercial interests, and improving the user experience.

The steps of the various methods above are divided just for the purpose of clear description. During implementation, they can be combined into one step or perform splitting of some steps into multiple steps. As long as the same logical relationship is included, it is within the scope of the present application. Adding insignificant modifications or introducing insignificant designs to its algorithms and process, but not changing the core design of its algorithms and process, are within the scope of the present application.

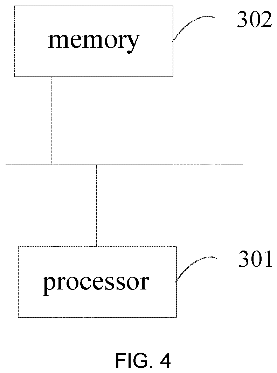

An embodiment of the present application further provides an electronic device, as shown in FIG. 4, including: at least one processor 301, and a memory 302 communicated with the at least one processor 301. The memory 302 is configured for storing an instruction executable by the at least one processor 301, and the instruction is executed by the at least one processor 301, so that the at least one processor 301 can execute the single board management method mentioned above.

The memory and the processor are connected by adopting bus mode. The bus can include any number of interconnected buses and bridges. The bus connects various circuits of one or more processors and memories together. The bus further connects together various other circuits such as peripherals, voltage regulators, and power management circuits, which are all well known in the art and therefore will not be further described herein. The bus interface provides the interface between the bus and the transceiver. A transceiver may be one element or may be multiple elements, such as multiple receivers and transmitters, providing a unit for communicating with various other devices over a transmission medium. The data processed by the processor is transmitted on the wireless medium by the antenna. Furthermore, the antenna further receives the data and transmits the data to the processor.

The processor is responsible for managing the bus and general processing, and further can provide a variety of functions, including timing, peripheral interfaces, voltage regulation, power management, and other control functions. Memory can be configured to store data used by the processor when performing operations.

An embodiment of the present application relates to a computer readable storage medium, which stores a computer program. When the computer program is executed by a processor, the above method embodiments are implemented.

That is, those skilled in the art can understand that all steps or part of the steps in implementing the methods of the above embodiments can be completed by instructing relevant hardware by a program. The program is stored in a storage medium and includes several instructions to cause equipment (which can be a microcontroller, a chip, etc.) or a processor to execute all steps or part of the steps of the methods described in various embodiments of the present application. The aforementioned storage media include: U disk, mobile hard disk, Read-Only Memory (ROM for short), Random Access Memory (RAM for short), magnetic disk or optical disk and other media that can store program code.

Those of skilled in the art can understand that the above-mentioned embodiments are specific examples for implementing the present application. In practical applications, various changes can be made in form and details without departing from the scope of the present application.

## Claims

1. A single board management method, **characterized by** comprising:
obtaining attribute information of a single board, wherein the attribute information is immutable;
determining whether the single board is an illegal single board according to the attribute information; and
in response to that the single board is the illegal single board, reporting alarm information, and prohibiting operation of the single board.

2. The single board management method according to claim 1, wherein in response to being applied to a network management equipment, the obtaining the attribute information of the single board comprises:
obtaining a first identification in the attribute information of the single board; and
the determining whether the single board is the illegal single board according to the attribute information comprises:
determining whether the single board is the illegal single board according to the first identification.

3. The single board management method according to claim 2, wherein the determining whether the single board is the illegal single board according to the first identification comprises:
querying an identification in a pre-stored blacklist; and
in response to that the first identification matches any identification in the blacklist, determining that the single board is the illegal single board.

4. The single board management method according to claim 2, wherein the determining whether the single board is the illegal single board according to the first identification comprises:
querying an identification in a pre-stored whitelist; and
in response to that the first identification does not match any identification in the whitelist, determining that the single board is the illegal single board.

5. The single board management method according to any one of claims 2 to 4, wherein the first identification comprises an electronic IDentity, EID of the single board in response to leaving a factory.

6. The single board management method according to claim 1, wherein in response to being applied to a network element, the obtaining the attribute information of the single board comprises:
obtaining a second identification in the attribute information of the single board; and
the determining whether the single board is the illegal single board according to the attribute information comprises:
determining whether the single board is the illegal single board according to operator information of the network element and the second identification.

7. The single board management method according to claim 6, wherein the second identification is generated in response to that the single board is powered on for a first time.

8. The single board management method according to claim 6, wherein the network element supports the network management equipment to set the second identification to the single board powered on for a first time by an input interface of the network element; wherein the single board powered on for the first time is in a state of being connected to the network element.

9. An electronic device, **characterized by** comprising:
at least one processor; and,
a memory communicated with the at least one processor; and
wherein the memory is configured for storing an instruction executable by the at least one processor, and the instructions is executed by the at least one processor so that the at least one processor executes the single board management method according to any one of claims 1 to 8.

10. A computer readable storage medium, storing a computer program, **characterized in that** when the computer program is executed by a processor, the single board management method according to any one of claims 1 to 8 is implemented.
